Europäisches Patentamt

European Patent Office

Office européen des brevets

(19)

(11) Veröffentlichungsnummer: **0 220 437**
**B1**

(12) **EUROPÄISCHE PATENTSCHRIFT**

(45) Veröffentlichungstag der Patentschrift: **06.06.90**

(21) Anmeldenummer: **86112345.3**

(22) Anmeldetag: **06.09.86**

(51) Int. Cl.⁵: **H 04 L 9/00,** H 03 K 3/84

(54) **Generator zur Erzeugung binärer Chiffriersequenzen.**

(30) Priorität: **17.10.85 CH 4482/85**

(43) Veröffentlichungstag der Anmeldung:
**06.05.87 Patentblatt 87/19**

(45) Bekanntmachung des Hinweises auf die
Patenterteilung:
**06.06.90 Patentblatt 90/23**

(84) Benannte Vertragsstaaten:
**CH DE GB LI SE**

(56) Entgegenhaltungen:
**DE-A-2 451 711
DE-C- 977 715
US-A-4 115 657**

(73) Patentinhaber: **BBC Brown Boveri AG
Haselstrasse
CH-5401 Baden (CH)**

(72) Erfinder: **Günther, Christoph-Georg, Dr.
Moosächerstrasse 8
CH-5442 Fislisbach (CH)**

EP 0 220 437 B1

**Beschreibung**

Die Erfindung betrifft einen Generator zur Erzeugung binärer Chiffriersequenzen gemäss dem Oberbegriff des Patentanspruchs 1.

Solche Generatoren werden insbesondere zur Verschlüsselung von binär codierter Sprache, sowie von binären Nachrichten und Daten eingegesetzt. Binäre Sequenzen werden häufig dadurch verschlüsselt, dass sie mit einer "pseudozufälligen" Chiffriersequenz vermischt werden. Diese werden per definitionem durch endliche deterministische Generatoren erzeugt und sind damit zwangsläufig periodisch. Die Generatoren selbst werden so ausgelegt, dass einige Einstellungen frei wählbar sind und als Schlüssel verwendet werden können. Man geht heute davon aus, dass dieser Schlüssel das einzige geheime Element an einem solchen Generator ist. Entsprechend ist es wünschenswert, dass verschiedene Schlüssel zu stark verschiedenen Chiffriersequenzen führen.

Beim sogenannten "stream ciphering" wird zu jedem Element einer binären Sequenz ein entsprechendes Element einer binären Chiffriersequenz modulo 2 hinzuaddiert. Bei diesem einfachen Verfahren muss damit gerechnet werden, dass die mit einem gegebenen Schlüssel erzeugte Chiffriersequenz jedermann zugänglich ist. Es ist deshalb wesentlich, dass das Bildungsgesetz der Sequenz nicht leicht zu erraten ist. Bei unausgeglichener Statistik der Chiffriersequenz kann man ferner durch statistische Analysen einen Teil der die Botschaft tragenden Sequenz rekonstruieren. Deshalb muss die Statistik der Chiffriersequenz ausgeglichen sein, d.h. die Chiffriersequenz darf sich in Bezug auf ihre Statistik nicht wesentlich von einer Sequenz unterscheiden, die durch ideales Werfen einer idealen Münze entsteht.

Ein Generator der eingangs genannten Art wurde in den folgenden Veröffentlichungen untersucht:

W. G. Chambers and S. M. Jennings, "Linear equivalence of certain BRM shiftregister sequences", *Electronics Letters,* vol. 20, pp. 1018—1019, Nov. 1984.

K. Kjeldsen and E. Andresen, "Some randomness properties of cascaded sequences", *IEEE Trans. Inform. Theory,* vol. IT—26, pp. 227—232, March 1980.

B. Smeets, "On the autocorrelation function of some sequences generated by clock controlled shift registers", *Proceedings of the Second Joint Swedish-Soviet Intern. Workshop on Inform. Theory,* pp. 130—136 (1985).

R. Vogel, "On the Linear Complexity of Cascaded Sequences", Adv. in Cryptology — EUROCRYPT '84, Lecture Notes in Computer Science, Vol. 209, p. 99—109, Springer Verlag 1985.

Aus der Patentschrift DE—C—977 715 ist ein aus mehreren Teilgeneratoren bestehender Zufallsgenerator bekannt. Die einzelnen Teilgeneratoren sind linear rückgekoppelte Schieberegister, die mit Abtast- und Antriebsorganen versehen sind. Sie sind derart in Serie geschaltet, dass ein Ausgang eines bestimmten Schieberegisters in Verbindung mit einem externen Signal auf das Antriebsorgan aller nachfolgender Schieberegister einwirkt. Die Impulse der Ableseorgane werden modulo-2 verknüpft und an einer Klemme ausgegeben.

Ans der Schrift DE—A—24 51 711 ist ebenfalls ein Chiffriergenerator mit mehreren Teilgeneratoren bekannt. Diese sind auf verschiedenen Hierarchiestufen untergebracht, wobei auf einer bestimmten Stufe jeweils mehrere Teilgeneratoren parallel laufen. Die Datenausgänge einer Stufe werden miteinander verknüpft und als Eingangsdaten an die nachfolgenden Generatoren weitergegeben. Die als Teilgeneratoren wirkenden Schieberegister werden alle von einem externen Taktgeber gesteuert.

Im folgenden werden nun einige für die Beurteilung der Generatoreigenschaften wichtige Grössen eingeführt. Diese lauten zusammmen mit den notwendigen Bedingungen, welche sich für diese Grössen ergeben, wie folgt:

1) *Periode:* Unter der Periode $T(\omega)$ einer Sequenz $\omega$ verstehen wir die minimale Periode dieser Sequenz, das ist die kleinste Zahl T, so dass

$$\omega_{t+T} = \omega_t \qquad \forall t \in Z^+ .$$

*Bedingung:* Die Periode einer Chiffriersequenz muss gross sein.

2) *Lineare Komplexität:* Die lineare Komplexität $L(\omega)$ einer Sequenz $\omega$ ist die Länge des kürzesten linear rückgekoppelten Schieberegisters das die Sequenz $\omega$ erzeugt.

*Bemerkung:* Die Kenntnis der Sequenz in $2L(\omega)$ aufeinanderfolgenden Zeitpunkten erlaubt ihre vollständige Bestimmung durch Anwendung des sogenannten Massey-Algorithmus.

*Bedingung:* Die lineare Komplexität einer Chiffriersequenz muss gross sein.

3) *Häufigkeit von Konfigurationen kleiner Länge:* (Poker-Test) Die Häufigkeit $\gamma_l(\omega, \{\sigma_i\})$ der Konfiguration $\{\sigma_i\}_0^{l-1}$ der Länge I in $\omega$ ist definiert durch:

$$\gamma_\ell(\omega, \{\sigma_i\}) := \{t \in \{0, \ldots, T(\omega)-1\} \mid \omega_{t+i} = \sigma_i ,$$

$$i \in \{0, \ldots, \ell-1\}\}$$

*Bemerkung:*

— Für eine periodisch fortgesetzte Folge statistisch unabhängiger gleichverteilter Zufallsvariablen gilt:

$$\overline{\gamma_\ell (\omega, \{\sigma_i\})}^{\omega} = \frac{1}{2^\ell} \, , \quad \forall \{\sigma_i\} \in (\{0,1\})^\ell \, , \quad \forall \, \ell \leq T$$

— Fur eine Chiffriersequenz kann dies i.A. nicht gelten, z.B. kommt bis auf zyklische Vertauschungen nur eine einzige Konfiguration der Länge T vor. Für eine solche Sequenz kann die Aussage aber noch für I $\leqq$ I\* gelten, wobei I\* von der Grössenordnung $\log_2 T$ ist. Mit dieser Einschränkung muss sie sogar gelten, da sonst statistische Analysen möglich werden.

*Bedingung:* Für eine Chiffriersequenz $\omega$ muss mit einem "gross genügendem" I\*($\omega$) gelten:

$$\left| \gamma_\ell (\omega \, , \, \{\sigma_i\}) - \frac{1}{2^\ell} \right| << \frac{1}{2^\ell}$$

$$\forall \, \{\sigma_i\} \in (\{0,1\})^\ell \, , \quad \forall \, \ell \leq \ell^*(\omega)$$

4) *2-Punkt-Autokorrelationen:*

Die 2-Punkt-Autokorrelationen $C_\omega(\tau)$ der Sequenz $\omega$ sind definiert durch:

$$C_\omega(\tau): = \frac{1}{T} \sum_{t=0}^{T-1} (1-2\omega_t) \, (1-2\omega_{t+\tau})$$

Sie liefern ein Mass für den Uebereinstimmungsgrad einer Sequenz mit ihren zyklischen Permutationen.

*Bedingung:* Schränkt man $\tau$ auf $\{0, \ldots, T{-}1\}$ ein, so muss für eine Chiffriersequenz $\omega$ der Periode T für fast alle $\tau$ gelten:

$$\left| C_\omega(\tau) - \delta_{\tau 0} \right| << 1$$

5) *2-Punkt-Kreuzkorrelationen zwischen zwei Sequenzen* $\omega^{(1)}$ *und* $\omega^{(2)}$ *die mit zwei verschiedenen Schlüsseln* $S^{(1)}$ *und* $S^{(2)}$ *erzeugt wurden:*

Diese Grössen sind definiert durch

$$K_{\omega^{(1)}, \, \omega^{(2)}}(\tau): = \frac{1}{T} \sum_{t=0}^{T-1} (1 - 2\omega_t^{(1)}) \, (1 - 2\omega_{t+\tau}^{(2)})$$

Sie bilden ein Mass für die Schlüsselabhängigkeit der erzeugten Sequenzen.

*Bedingung:* Sind $\omega^{(1)}$ und $\omega^{(2)}$ zwei Chiffriersequenzen die durch einen gegebenen Generator mit verschiedenen Schlüsseleinstellungen $S^{(1)}$ und $S^{(2)}$ erzeugt wurden, so muss für fast alle $\tau \in \{0, \ldots, T{-}1\}$ gelten:

$$\left| K_{\omega^{(1)}, \, \omega^{(2)}}(\tau) \right| << 1 \qquad .$$

Bei dem bekannten Generator sind die unter 1) und 2) genannten Bedingungen erfüllt. Weiter sind bei dem bekannten Generator die unter 3) und 4) definierten Grössen zwar berechenbar, die zugehörigen Bedingungen jedoch nicht erfüllt.

Die Erfindung, wie sie in den Patentansprüchen gekennzeichnet ist, löst die Aufgabe, einen Generator der eingangs genannten Art anzugeben, für den nicht nur die unter 1) bis 5) definierten Grössen berechenbar, sondern zudem ihre zugehörigen Bedingungen sämtlich erfüllt sind.

Die durch die Erfindung erreichten Vorteile sind im wesentlichen darin zu sehen, dass neben der Tatsache, dass der erfindungsgemässe Generator hervorragende Eigenschaften im Sinne der unter 1) bis 5) genannten Bedingungen aufweist, er darüber hinaus äusserst einfach zu implementieren ist.

Im folgenden wird die Erfindung anhand von Ausführungsbeispielen näher erläutert, wobei auf die Zeichnung Bezug genommen wird. Es zeigt:

Fig. 1 einen Generator, welcher unter Verwendung von drei Teilgeneratoren aufgebaut ist und

Fig. 2 einen Generator, welcher sich durch Verallgemeinerung des Generators nach Fig. 1 ergibt.

EP 0 220 437 B1

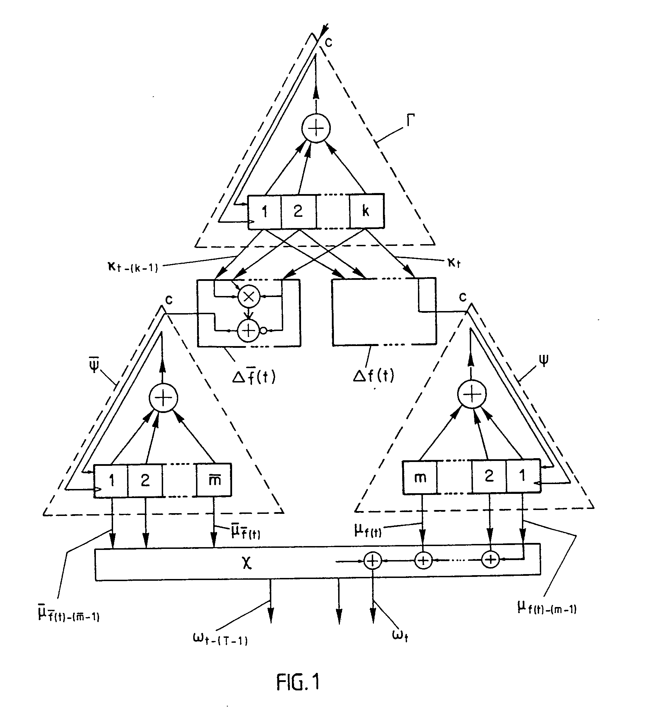

Mit $\Gamma$, $\Psi$ und $\overline{\Psi}$ sind in Fig. 1 drei als gestrichelte Dreiecke schematisch dargestellte Teilgeneratoren bezeichnet, welche binäre Sequenzen $\kappa$, $\mu$ und $\overline{\mu}$ mit einer Periode von K, M und $\overline{M}$ erzeugen.

Die drei Teilgeneratoren $\Gamma$, $\Psi$ und $\overline{\Psi}$ können beispielsweise, wie in Fig. 1 innerhalb der strichlierten Dreiecke dargestellt, durch linear rückgekoppelte Schieberegister der maximalen Periode $K = 2^{k-1}$, $M = 2^{m-1}$ und $\overline{M} = 2^{\overline{m}-1}$ und der Länge k, m und $\overline{m}$ implementiert sein. Bei einem linear rückgeloppelten Schieberegister ist ein Teil oder sind sämtliche Bits des Schieberegisters, zueinander z.B. modulo-2 addiert, auf seinen Eingang zurückgeführt.

Die Teilgeneratoren $\Gamma$, $\Psi$ und $\overline{\Psi}$ müssen getaktet werden und weisen dazu jeweils Takteingänge c auf. Der Teilgenerator $\Gamma$ erhält seinen Takt von einem in Fig. 1 nicht dargestellten, externen Taktgeber. Die Takte der beiden übrigen Teilgeneratoren $\Psi$ und $\overline{\Psi}$ sind über Funktionsgeber $\Delta f(t)$ und $\Delta \overline{f}(t)$ von Ausgängen des Teilgenerators $\Gamma$ abgeleitet. An diesen Ausgängen soll jeweils die Sequenz $\kappa$ abgreifbar sein und zwar an jedem Ausgang in einer anderen zeitlichen Lage (Phase). Bei einer Länge K der Periode der Sequenz $\kappa$ sind grundsätzlich K solcher verschiedener zeitlicher Lagen $\kappa_t \ldots \kappa_{t-(K-1)}$ möglich. Diese K zeitlichen Lagen können bei einer Implementierung des Teilgenerators $\Gamma$ als linear rückgekoppeltes Schieberegister durch geeignete Linearkombinationen von lediglich k aufeinanderfolgenden Ausgängen des Schieberegisters realisiert werden. Entsprechende sind in Fig. 1 nur k Ausgänge des Teilgenerators $\Gamma$ eingezeichnet.

Auch die Sequenzen $\mu$ und $\overline{\mu}$ können von den Teilgeneratoren $\Psi$ und $\overline{\Psi}$ in verschiedenen zeitlichen Lagen erzeugt werden. Entsprechend ihrer Periodenlänge sind M bzw. $\overline{M}$ solcher zeitlicher Lagen $\mu_{f(t)}, \ldots,$ $\mu_{f(t)-(M-1)}$ bzw. $\overline{\mu}_{\overline{f}(t)}, \ldots, \overline{\mu}_{\overline{f}(t)-(\overline{M}-1)}$ möglich. Sind die Teilgeneratoren $\Psi$ und $\overline{\Psi}$ als linear rückgekoppelte Schieberegister implementiert, so können die M bzw. $\overline{m}$ verschiedenen zeitlichen Lagen wiederum durch geeignete Linearkombinationen von lediglich m bzw. $\overline{m}$ aufeinanderfolgenden Ausgängen der Schieberegister realisiert werden. Es sind deshalb in Fig. 1 lediglich m bzw. $\overline{M}$ solcher Ausgänge eingezeichnet.

Die Funktionen f und $\overline{f}$ sind definiert durch

$$f(t) := \sum_{s=0}^{t-1} \Delta f(s)$$

$$\overline{f}(t) := \sum_{s=0}^{t-1} \Delta \overline{f}(s).$$

Die an den Ausgängen der Teilgeneratoren $\Psi$ und $\overline{\Psi}$ verfügbaren Sequenzen sind, nicht notwendigerweise alle, über mindestens eine Verknüpfungseinheit $\chi$ zur Chiffriersequenz $\omega_t$ verknüpft, welche unter Umständen in ebenfalls verschiedenen zeitlichen Lagen $\omega_t, \ldots, \omega_{t-(T-1)}$ zur Verfügung stehen soll.

Die beschriebenen Elemente, das sind die drei Teilgeneratoren $\Gamma$, $\Psi$ und $\overline{\Psi}$, die beiden Funktionsgeber $\Delta f(t)$ und $\Delta \overline{f}(t)$ sowie die Verknüpfungseinheit $\chi$ bilden in ihrer Kombination einen Generator nach der Erfindung.

Wie in Fig. 1 innerhalb der die Funktionsgeber $\Delta f(t)$ und $\Delta \overline{f}(t)$ darstellenden Rechtecke gezeigt, kann durch den Funktionsgeber $\Delta f(t)$ beispielsweise die Sequenz $\kappa$ allein in der zeitlichen Lage t an den Takteingang c des Teilgenerators $\Psi$ weitergegeben sein, während durch den Funktionsgeber $\Delta \overline{f}(t)$ beispielsweise das Komplement der Sequenz $\kappa$ in der zeitlichen Lage t sowie modulo-2 zum Produkt der Sequenz $\kappa$ in allen zeitlichen Lagen addiert, das ist modulo-2 zu $\kappa_{t-(k-1)} \ldots \kappa_{t-1} \kappa_t$ addiert an den Takteingang c des Teilgenerators $\overline{\Psi}$ geführt sein kann. Durch die Verknüpfungseinheit $\chi$ können gewisse zeitliche Lagen der von der Teilgeneratoren $\Psi$ und $\overline{\Psi}$ erzeugten Sequenzen $\mu$ und $\overline{\mu}$ modulo-2 addiert sein, was für die $\mu_{f(t)}, \ldots, \mu_{f(t)-(m-1)}$ in Fig. 1 innerhalb des die Verknüpfungseinheit $\chi$ bildenden Rechtecks beispielsweise auch dargestellt ist.

Mit den vorgenannten speziellen Ausbildungen der Teilgeneratoren $\Gamma$, $\Psi$ und $\overline{\Psi}$, der Funktionsgeber $\Delta f(t)$ und $\Delta \overline{f}(t)$ sowie der Verknüpfungseinheit $\chi$ weist der erfindungsgemässe Generator die nachstehend erläuterten Eigenschaften im Hinblick auf die eingangs unter 1) bis 5) definierten Grössen und Bedingungen auf:

Es seien:

$$f \Phi(t) := \sum_{s=0}^{t-1} \Delta f(t) + \Phi$$

$$\overline{f} \Phi(t) := \sum_{s=0}^{t-1} \Delta \overline{f}(t) + \Phi$$

(I)

4

mit

$$\Delta f(t) = x_t \quad ,$$

$$\Delta \bar{f}(t) = (1 - x_t + \delta_{t,t_o}^{(K)}) \quad ,$$

$$\delta_{t,t_o}^{(K)} = \begin{cases} 1 & \text{falls } t \equiv t_o \pmod{K} \quad \text{ist} \\ 0 & \text{sonst} \end{cases} \qquad (II)$$

$(t_o$ wurde so gewählt, dass $x_{t_o} = 1$ ist),

$$\phi \in \{0, \ldots, M-1\}$$
$$\bar{\phi} \in \{0, \ldots, \bar{M}-1\}$$

($\phi$ und $\bar{\phi}$ sind Schlüssel, welche die Phase zwischen den Teilgeneratoren $\Gamma$ und $\Psi$ einerseits und $\Gamma$ und $\bar{\Psi}$ andererseits festlegen),
dann definiert

$$\omega_t^{(S)} := \mu_{f^\phi(t)} \oplus \bar{\mu}_{\bar{f}^{\bar{\phi}}(t)}$$

die Chiffriersequenz zum Schlüssel $S = (\phi, \bar{\phi})$.
Im oben beschriebenen Fall, d.h. wenn $\Gamma$, $\Psi$, $\bar{\Psi}$ linear rückgekoppelte Schieberegister sind, ergibt sich aus den Definitionsgleichungen (I) und (II) für

$$\overset{(-)}{F} := \overset{(-)}{f}{}^{(\bar{\phi})}(K-1) - \overset{(-)}{f}{}^{(\bar{\phi})}(0)$$

der Wert

$$\overset{(-)}{F} = \frac{K+1}{2} = 2^{k-1} \quad ,$$

was insbesondere auch impliziert, dass $\overset{(-)}{M}$ und $\overset{(-)}{F}$ keinen gemeinsamen Teiler haben. Falls M und $\bar{M}$ ebenfalls keinen gemeinsamen Teiler haben und weiter M durch K geteilt wird und $\bar{M}$ grösser als K ist, gilt für alle Schlüssel S:

1. für die Periode

$$T(\omega^S) = K \cdot M \cdot \bar{M}$$

2. für die lineare Komplexität:

$$L(\omega^S) \geqq m \cdot K$$

3a. für die relative Häufigkeit von "1":

$$\omega^S = \tfrac{1}{2}(1 - \frac{1}{M\bar{M}})$$

3b. für die relative Häufigkeit von Konfigurationen einer Länge $l \leqq \min(k,m,\bar{m})$:

$$\left| \gamma_l(\omega^S, \{\sigma_i\}) - \frac{1}{2^l} \right| =$$

$$= \frac{1}{2^l} \{ O(\frac{1}{K}) + O((\frac{3}{2})^l \frac{1}{M}) + O((\frac{3}{2})^l \frac{1}{\bar{M}}) + O(2^l \frac{1}{M\bar{M}}) \}$$

Hier, wie auch im folgenden, soll $0(\ldots)$ so verstanden sein, dass

$$X = 0(\frac{1}{N})$$

bedeutet, dass $X \cdot N$ im Limes $N \to \infty$ gegen eine Konstante strebt.

4. für die 2-Punkt-Autokorrelationen:

$$\text{Es gibt} \quad \{\rho_{\sigma,i}^{S}\}_{\sigma \in \{0\ldots M\bar{M}-1\}, i \in \{0,1\}} \quad \text{so dass}$$

$$\text{für alle} \quad \tau = \rho + \sigma K \neq \rho_{\sigma,i}^{S} + \sigma K \quad \text{gilt:}$$

$$|C_{\omega S}(\tau)| = 0(\frac{1}{M}) + 0(\frac{1}{\bar{M}})$$

5. für die 2-Punkt-Kreuzkorrelationen zwischen zwei Sequenzen die mit 2 verschiedenen Schlüsseln $S^{(1)}$ und $S^{(2)}$ erzeugt werden:

$$\text{Es gibt} \quad \{\rho_{\sigma,i}^{S^{(1)}S^{(2)}}\}_{\sigma \in \{0,\ldots M\bar{M}-1\}, i \in \{0,1\}} \quad \text{so dass}$$

$$\text{für alle} \quad \tau = \rho + \sigma K \neq \rho_{\sigma,i}^{S^{(1)},S^{(2)}} + \sigma K \quad \text{gilt:}$$

$$|K_{\omega S^{(1)}, \omega S^{(2)}}(\tau)| = 0(\frac{1}{M}) + 0(\frac{1}{\bar{M}})$$

Diese Ergebnisse, welche für realistische Wahlen der Parameter (z.B. $k = m = 127$, $\bar{m} = 255$) hervorragende Eigenschaften im Sinn von 1) bis 5) garantieren, zusammen mit der äusserst einfachen Implementierung, prädestinieren die beschriebene Struktur für kryptographische Anwendungen.

Die Teilgeneratoren $\Gamma$, $\Psi$ und $\bar{\Psi}$ von Fig. 1 müssen nicht notwendig durch linear rückgekoppelte Schieberegister implementiert sein. Beliebige andere Implementierungen sind ebenso möglich. Als Teilgenerator kann im Sinne einer Kaskadierung auch ein Generator der beschriebenen Art selbst verwendet werden.

Sind $\kappa$, $\mu$, $\bar{\mu}$ Sequenzen der Perioden $K$, $M$, $\bar{M}$, welche durch 3 beliebige Teilgeneratoren $\Gamma$, $\Psi$, $\bar{\Psi}$ erzeugt werden, sind $\Delta f$ und $\bar{\Delta f}$ Funktionen von $\kappa$ und $t$, welche $K$-periodisch in $t$ sind, und ist die durch den zusammengesetzten Generator erzeugte Sequenz durch

$$\omega_t = \mu_{f(t)} \oplus \bar{\mu}_{\bar{f}(t)}$$

gegeben, wobei $\overset{(-)}{f}(t)$ durch

$$\overset{(-)}{f}(t) := \sum_{s=0}^{t-1} \overset{(-)}{\Delta f}(s)$$

definiert ist, so lassen sich, unter Verwendung von $(M, \bar{M}) = (M, F) = (\bar{M}, \bar{F}) = 1$ und von gewissen weiteren kompatiblen Voraussetzungen, zu 1) bis 5) entsprechende Eigenschaften beweisen.

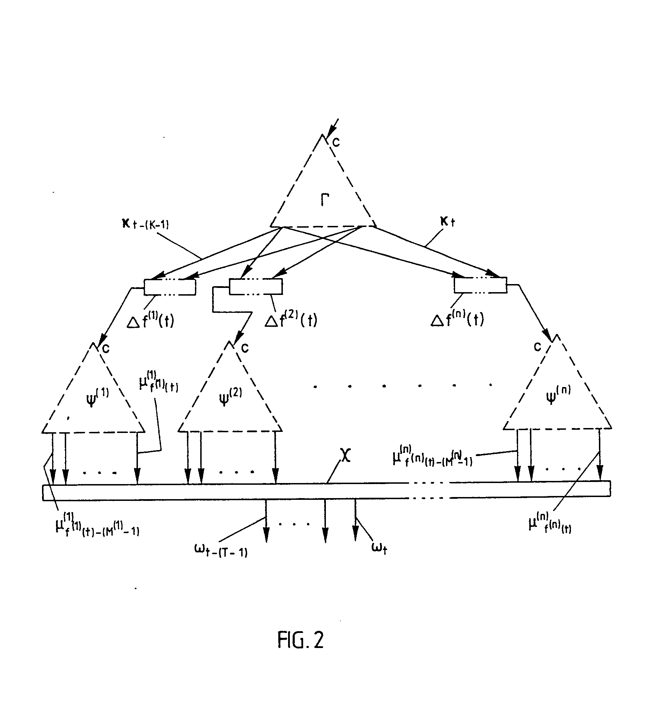

Eine Verallgemeinerung des bisher beschriebenen und in Fig. 1 dargestellten Generators ergibt sich weiter indem man an Stelle von 3 beliebigen Teilgeneratoren $n+1$ beliebige Teilgeneratoren in entsprechender Weise verknüpft, wie dies in Fig. 2 dargestellt ist. D.h. sind $\kappa$, $\mu^{(1)}, \ldots, \mu^{(n)}$ Sequenzen der Perioden $K$, $M^{(1)}, \ldots, M^{(n)}$ die durch $n+1$ beliebige Teilgeneratoren $\Gamma$, $\Psi^{(1)}, \ldots, \Psi^{(n)}$ erzeugt werden und sind $\Delta f^{(1)}, \ldots, \Delta f^{(n)}$ beliebige $K$-periodische Funktionen von $\kappa$ und $t$, so ist die durch den zusammengesetzten Generator erzeugte Sequenz durch

$$\omega_t = \bigoplus_{i=1}^{n} \mu^{(i)}_{f^{(i)}(t)}$$

gegeben, wobei $f^{(i)}(t)$ durch

$$f^{(i)}(t) : = \sum_{s=0}^{t-1} \Delta f^{(i)}(s)$$

definiert wurde.

Schliesslich können im Beispiel von Fig. 1 wie im Beispiel von Fig. 2 die von den Teilgeneratoren $\Psi$ und $\overline{\Psi}$ bzw. $\Psi^{(1)}, \ldots, \Psi^{(n)}$ erzeugten Sequenzen $\mu, \overline{\mu}$ bzw. $\mu^{(1)}, \ldots, \mu^{(n)}$ anstatt, wie vorstehend beispielsweise angenommen, modulo-2, auch durch eine andere Funktion zur Chiffriersequenz $\omega_t$ verknüpf sein:

$$\omega_t = \chi(\mu^{(1)}_{f^{(1)}(t)}, \ldots, \mu^{(n)}_{f^{(n)}(t)}) ,$$

wobei $\chi$ eine beliebige Funktion ist, welche mit dem gleichen Symbol wie die Verknüpfungseinheit selbst bezeichnet wurde. Diese Funktion soll die folgende Beziehung erfüllen

$$\sum_{x \in (\{0,1\})^n} \chi(x^{(1)}, \ldots, x^{(n)}) \sim 2^{n-1} .$$

also gleich häufig beide binären Zustände annehmen, wenn ihre Argumente alle möglichen Werte durchlaufen.

**Patentansprüche**

1. Generator zur Erzeugung binärer Chiffriersequenzen mit mehreren, getakteten Teilgeneratoren, welche ihrerseits jeweils an einem oder mehreren Ausgängen binäre Sequenzen erzeugen, wobei
a) bei einer Anzahl von drei Teilgeneratoren ($\Gamma$, $\Psi$, $\overline{\Psi}$) der Takt von zwei dieser Teilgeneratoren von mindestens einem der Ausgänge des dritten Teilgenerators direkt oder über Funktionsgeber ($\Delta f(t)$, $\Delta \overline{f}(t)$) gesteuert ist und
b) die an den Ausgängen der genannten zwei Teilgeneratoren verfügbaren Sequenzen mittels mindestens einer Verknüpfungseinheit ($\chi$) gemäss einer Verknüpfungsfunktion zu mindestens einer Chiffriersequenz verknüpft sind, welche Verknüpfungsfunktion etwa gleich häufig beide binäre Zustände annimmt, wenn ihre Argumente alle möglichen Werte durchlaufen, dadurch gekennzeichnet, dass

c) die Periode K der Sequenz, welche von dem dritten Teilgenerator ($\Gamma$) erzeugt wird, die Periode M oder $\overline{M}$ der Sequenzen, welche von einem der beiden übrigen Teilgeneratoren ($\Psi$, $\overline{\Psi}$) erzeugt werden, teilt und dass
d) die über eine Periode K der erstgenannten Sequenz genommene Summe über die binären Werte der zweitgenannten Sequenzen durch $F = 2^e + p(M)$ resp. $\overline{F} = 2^{\overline{e}} + \overline{p}(\overline{M})$ gegeben ist, wobei e und $\overline{e}$ positive ganze Zahlen sind und p und $\overline{p}$ beliebige Polynome in M und $\overline{M}$ sind.
2. Generator nach Anspruch 1, dadurch gekennzeichnet, dass mindestens zwei der an den Ausgängen der zwei Teilgeneratoren ($\Psi$, $\overline{\Psi}$) verfügbaren Sequenzen mittels der Verknüpfungseinheit ($\chi$) gemäss der modulo-2-Addition verknüpft sind.
3. Generator nach Anspruch 1 oder 2, dadurch gekennzeichnet, dass mit Ausnahme des dritten Teilgenerators ($\Gamma$) alle Teilgeneratoren linear rückgekoppelte Schieberegister sind.
4. Generator nach einem der Ansprüche 1 bis 3, dadurch gekennzeichnet, dass die Periode der binären Sequenzen, welche von den zwei ersten Teilgeneratoren ($\Psi$, $\overline{\Psi}$) erzeugt werden, keinen gemeinsamen Teiler haben.
5. Generator nach einem der Ansprüche 1 bis 4, dadurch gekennzeichnet, dass ein Ausgang des dritten Teilgenerators ($\Gamma$) auf einen Takteingang eines ersten ($\Psi$) der beiden übrigen Teilgeneratoren ($\Psi$, $\overline{\Psi}$) und das Komplement des genannten Ausgangs über einen Funktionsgeber ($\Delta \overline{f}(t)$) entweder direkt oder modulo-2 mit einem weiteren Ausgang oder mit ihrerseits vorzugsweise multiplikativ miteinander verknüpften weiteren Ausgängen des dritten Teilgenerators ($\Gamma$) addiert auf einen Takteingang (c) des verbleibenden zweiten Teilgenerators ($\overline{\Psi}$) geschaltet ist.

6. Generator nach einem der Ansprüche 1 bis 5, dadurch gekennzeichnet, dass sowohl M und F als auch $\overline{M}$ und $\overline{F}$ keinen gemeinsamen Teiler haben.

7. Generator nach einem der Ansprüche 1 bis 6, dadurch gekennzeichnet, dass die Häufigkeit einer fest vorgegebenen Konfiguration σ ler Länge 1, in einer der durch die Teilgeneratoren erzeugten Sequenz genommen über eine Periode nahezu $1/2^1$ ist, falls 1 den Zweierlogarithmus der Periode der betrachteten Sequenz nicht wesentlich übersteigt.

8. Generator nach einem der Ansprüche 1 bis 7, dadurch gekennzeichnet, dass sämtliche Teilgeneratoren ($\Psi$, $\overline{\Psi}$, $\Gamma$) linear rückgekoppelte Schieberegister sind.

## Revendications

1. Générateur destiné à produire des séquences de chiffrage binaires comportant plusieurs sous-générateurs synchronisés, qui de leur côté produisent chacun des séquences binaires sur une ou plusieurs sorties, dans lequel:

a) dans le cas d'un nombre de trois sous-générateurs ($\Gamma$, $\Psi$, $\overline{\Psi}$), le rythme de deux de ces sous-générateurs est régi, directement ou par l'intermédiaire de générateurs de fonctions ($\Delta f(t)$, $\Delta \overline{f}(t)$), à partir d'au moins une des sorties du troisième sous-générateur, et

b) les séquences disponibles aux sorties desdits deux sous-générateurs sont combinées à l'aide d'au moins une unité logique (X), conformément à une fonction logique, en au moins une séquence de chiffrage, la fonction logique prenant les deux états binaires à des fréquences à peu près égales, lorsque ses arguments parcourent toutes les valeurs possibles, caractérisé en ce que:

c) la période K de la séquence, qui est produite par le troisième sous-générateur ($\Gamma$), divise la période M ou $\overline{M}$ des séquences qui sont produites par un des deux autres sous-générateurs ($\Psi$, $\overline{\Psi}$), et que:

d) la somme, prise sur une période K de ladite première séquence, est donnée sur les valeurs binaires desdites secondes séquences par $F = 2^e + p(M)$ ou $\overline{F} = 2^{\overline{e}} + \overline{p}(\overline{M})$ où e et $\overline{e}$ sont des nombres entiers positifs et p et $\overline{p}$ sont des polynômes quelconques en M et $\overline{M}$.

2. Générateur suivant la revendication 1, caractérisé en ce qu'au moins deux des séquences disponibles aux sorties des deux sous-générateurs ($\Psi$, $\overline{\Psi}$) sont combinées au moyen de l'unité logique (X) conformément à l'addition modulo-2.

3. Générateur suivant la revendication 1 ou 2, caractérisé en ce qu'à l'exception du troisième sous-générateur ($\Gamma$) tous les sous-générateurs sont des registres à décalage linéaires à boucle fermée.

4. Générateur suivant l'une quelconque des revendications 1 à 3, caractérisé en ce que les périodes des séquences binaires, qui sont produites par les deux premiers sous-générateurs ($\Psi$, $\overline{\Psi}$), ne comportent pas de diviseur commun.

5. Générateur suivant l'une quelconque des revendications 1 à 4, caractérisé en ce qu'une sortie du troisième sous-générateur ($\Gamma$) est connectée à une entrée d'horloge d'un premier ($\Psi$) des deux autres sous-générateurs ($\Psi$, $\overline{\Psi}$) et le complément de ladite sortie est connecté à une entrée d'horloge (c) du second sous-générateur ($\overline{\Psi}$) restant par l'intermédiaire d'un générateur de fonctions ($\Delta \overline{f}(t)$) soit directement, soit additioné modulo-2 avec une autre sortie ou avec d'autres sorties du troisième sous-générateur ($\Gamma$) qui, de leur côté, sont de préférence combinées de manière multiplicative.

6. Générateur suivant l'une quelconque des revendications 1 à 5, caractérisé en ce que M et F ainsi que $\overline{M}$ et $\overline{F}$ n'ont pas de diviseur commun.

7. Générateur suivant l'une quelconque des revendications 1 à 6, caractérisé en ce que la fréquence d'une configuration σ prédéfinie de manière fixe de la longueur 1, considérée dans une séquence produite par les sous-générateurs, est approximativement de $1/2^1$ sur une période, au cas où 1 ne dépasse pas sensiblement le logarithme à base deux de la période de la séquence considérée.

8. Générateur suivant l'une quelconque des revendications 1 à 7, caractérisé en ce que tous les sous-générateurs ($\Psi$, $\overline{\Psi}$, $\Gamma$) sont des registres à décalage linéaires à boucle fermée.

## Claims

1. Generator for generating binary ciphering sequences by means of several clocked part-generators which, in turn, generate binary sequences at one or several outputs in each case, wherein

a) in a number of three part-generators ($\Gamma$, $\Psi$, $\overline{\Psi}$), the clock of two of these part-generators is controlled directly or via function generators ($\Delta f(t)$, $\Delta \overline{f}(t)$) from at least one of the outputs of the third part-generator, and

b) the sequences available at the outputs of the said two part-generators are logically combined by means of at least one combining unit ($\chi$) in accordance with a logical combining function to form at least one ciphering sequence, which logical combining function assumes both binary states with approximately the same frequency when its arguments pass through all possible values, characterized in that

c) the period K of the sequence which is generated by the third part-generator ($\Gamma$) divides the period M or $\overline{M}$ of the sequences which are generated by one of the two remaining part-generators ($\Psi$, $\overline{\Psi}$), and in that

d) the sum over the binary values of the second-mentioned sequences, taken over a period K of the first-mentioned sequence, is given by $F = 2^e + p(M)$ or $\overline{F} = 2^{\overline{e}} + \overline{p}(\overline{M})$, where e and $\overline{e}$ are positive integral numbers and p and $\overline{p}$ are arbitrary polynomials in M and $\overline{M}$.

8

2. Generator according to Claim 1, characterized in that at least two of the sequences available at the outputs of the two part-generators ($\Psi$, $\overline{\Psi}$) are logically combined in accordance with modulo-2 addition by means of the logical combining unit ($\chi$).

3. Generator according to Claim 1 or 2, characterized in that all part-generators are linear feedback-type shift registers with the exception of the third part-generator ($\Gamma$).

4. Generator according to one of Claims 1 to 3, characterized in that the period of the binary sequences which are generated by the two first part-generators ($\Psi$, $\overline{\Psi}$) do not have a common divisor.

5. Generator according to one of Claims 1 to 4, characterized in that an output of the third part-generator ($\Gamma$) is connected to a clock input of a first ($\Psi$) one of the two other part-generators ($\Psi$, $\overline{\Psi}$) and the complement of the said output is connected via a function generator ($\Delta \overline{f}(t)$) either directly or modulo-2 to another output or to other outputs, which, in turn, are preferably multiplicatively logically combined with each other, of the third part-generator ($\Gamma$) added to a clock input (c) of the remaining second part-generator ($\overline{\Psi}$).

6. Generator according to one of Claims 1 to 5, characterized in that both M and F and $\overline{M}$ and $\overline{F}$ do not have a common divisor.

7. Generator according to one of Claims 1 to 6, characterized in that the frequency of a permanently predefined configuration $\sigma$ of length 1, in one of the sequence (sic) generated by the part-generators is nearly $1/2^1$, taken over a period, if 1 does not significantly exceed the logarithm to the base of 2 of the period of the sequence under consideration.

8. Generator according to one of Claims 1 to 7, characterized in that all part-generators $\Psi$, $\overline{\Psi}$ or $\Gamma$ are linear feedback-type shift registers.

FIG.1

FIG. 2